(19) **Europäisches Patentamt European Patent Office Office européen des brevets**

(11) **EP 1 530 390 B1**

(12) **FASCICULE DE BREVET EUROPEEN**

(45) Date de publication et mention de la délivrance du brevet:
**15.08.2007 Bulletin 2007/33**

(51) Int Cl.:
***H04Q 7/36*** *(2006.01)*

(21) Numéro de dépôt: **03292803.8**

(22) Date de dépôt: **10.11.2003**

(54) **Système et procédé de télécommunications pour assurer le fonctionnement d'un téléphone mobile à bord d'un véhicule lors du franchissement d'une frontière, et répéteur pour ce système**

Telekommunikationssystem und -verfahren zum Betreiben eines mobilen Telefons an Board eines Fahrzeugs bei der Überschreitung einer Grenze und Verstärker dazu

Telecommunication system and method to ensure the operations of a mobile telephone on board of a vehicle during border crossing and repeater for such a system

(84) Etats contractants désignés:
**AT BE BG CH CY CZ DE DK EE ES FI FR GB GR HU IE IT LI LU MC NL PT RO SE SI SK TR**

(43) Date de publication de la demande:
**11.05.2005 Bulletin 2005/19**

(73) Titulaire: **Orangefrance**
**92120 Montrouge (FR)**

(72) Inventeur: **Daoudal, Jean-Pierre**
**78320 Levis Saint Nom (FR)**

(74) Mandataire: **Habasque, Etienne J. Jean-François et al**
**Cabinet Lavoix**
**2, Place d'Estienne d'Orves**
**75441 Paris Cédex 09 (FR)**

(56) Documents cités:
**EP-A- 1 282 327        WO-A-94/28684**
**US-A- 5 924 033        US-B1- 6 345 186**

## Description

L'invention concerne un système et un procédé de télécommunication visant à assurer le fonctionnement d'un téléphone mobile à bord d'un véhicule lors du franchissement d'une frontière.

Plus précisément, le système comporte :

- une première et une seconde stations, propres à émettre respectivement un premier signal et un second signal de télécommunication pour permettre l'établissement et/ou le maintien d'une liaison de télécommunication à partir du téléphone mobile, et

- un répéteur placé à bord du véhicule propre à amplifier et à rediffuser au moins un des signaux de télécommunication avec un niveau de puissance suffisant en permanence pour permettre au téléphone mobile à bord du véhicule d'établir et/ou de maintenir une liaison de télécommunication indépendamment des variations de puissance du signal de télécommunication reçu par le répéteur.

De tels systèmes sont particulièrement utiles lors du franchissement d'une frontière maritime entre deux pays différents séparés par un bras de mer.

Par exemple, des systèmes connus sont utilisés pour permettre le fonctionnement des téléphones mobiles à bord des transbordeurs assurant la traversée de la Manche entre la France et l'Angleterre. Ces transbordeurs sont également dénommés « ferry » ou « ferry-boat ».

Actuellement, des stations de télécommunication dites stations de base dans le cas d'un réseau GSM, sont disposées sur les côtes anglaises et françaises et définissent des zones de couverture qui s'étendent en partie sur la surface de la Manche mais ne se chevauchent pas.

Les conditions de propagation des signaux électromagnétiques et plus particulièrement des signaux de radio-télécommunication, sur la surface de la mer, varient de façon importante à chaque instant. Par conséquent, contrairement, par exemple, au cas d'une frontière terrestre, même si les zones de couverture des stations françaises et anglaises se chevauchaient le long de la frontière maritime de manière à couvrir l'ensemble de la surface de la Manche, les téléphones mobiles à bord des ferries resteraient inutilisables. En effet, dès qu'un téléphone mobile se trouverait à plus de 15 km des côtes, le meilleur signal qu'il recevrait viendrait en alternance soit des côtes anglaises, soit des côtes françaises. Dès lors, toutes les conversations établies à partir de ce téléphone mobile serait très fréquemment interrompues rendant le téléphone mobile inutilisable. Dans ces conditions, le signal reçu est dit instable.

De manière à remédier à ce problème, il a déjà été proposé d'équiper les ferries avec des répéteurs propres à amplifier et à rediffuser uniquement le signal émis à partir, par exemple, des côtes anglaises. Ces répéteurs résolvent efficacement le problème de stabilité des signaux reçus puisqu'ils rediffusent en permanence à bord du ferry un signal stable avec un bon niveau de qualité.

Dès lors, un abonné d'un opérateur anglais qui embarque sur un tel ferry peut utiliser son téléphone mobile jusqu'à l'entrée d'un port français tout en étant facturé au prix d'un appel national puisque ses conversations n'empruntent pas le réseau d'un opérateur étranger. A l'inverse, un abonné d'un opérateur français embarquant sur ce ferry sera facturé au prix d'un appel international dès qu'il sera à plus de 15 km des côtes françaises et ceci même si le ferry est encore dans les eaux françaises.

Un tel système bien que fonctionnant correctement ne respecte pas la réglementation internationale en matière de téléphonie mobile. Cette réglementation interdit à un opérateur d'un pays donné d'étendre sa zone de couverture sur des pays voisins. Dans l'exemple décrit ci-dessus, les systèmes connus à base de répéteurs conduisent à étendre la zone de couverture des opérateurs anglais au-delà de leurs frontières et jusqu'aux côtes françaises.

De l'état de la technique concernant la fonctionnalité de « handover » est décrit dans EP-A-1 282 327.

L'invention vise à remédier à cet inconvénient en proposant un système de télécommunication assurant les mêmes services que ceux des systèmes connus décrits ci-dessus mais en respectant la réglementation internationale.

L'invention a donc pour objet un système de télécommunication conforme à la revendication 1.

Dans le système ci-dessus, en supposant que la première station est sur les côtes anglaises et la seconde station sur les côtes françaises, dès que le ferry franchit la frontière maritime entre la France et l'Angleterre, le signal amplifié et rediffusé n'est plus le signal de l'opérateur anglais mais celui de l'opérateur français. Dès lors, ce système tout en présentant les mêmes avantages que les systèmes connus est de plus conforme à la réglementation internationale.

D'autres caractéristiques du système conforme à l'invention, apparaissent dans les revendications dépendantes.

L'invention a également pour objet un répéteur conforme à la revendication 8.

L'invention a également pour objet un procédé de télécommunication conforme à la revendication 9.

D'autres caractéristiques du procédé apparaissent dans les revendications dépendantes,

- l'étape consistant à détecter la frontière consiste à fixer la taille de la cellule par le MAX-MS-RANGE. Le MAX-MS-RANGE est la fixation de la taille de la cellule par pallier de 500 mètres.

L'invention sera mieux comprise à la lecture de la description qui va suivre donnée uniquement à titre d'exemple et faite en se référant aux dessins sur lesquels :

- la figure 1 est une illustration schématique de la structure d'un système de télécommunication conforme à l'invention, et
- la figure 2 est un organigramme d'un procédé de télécommunication conforme à l'invention.

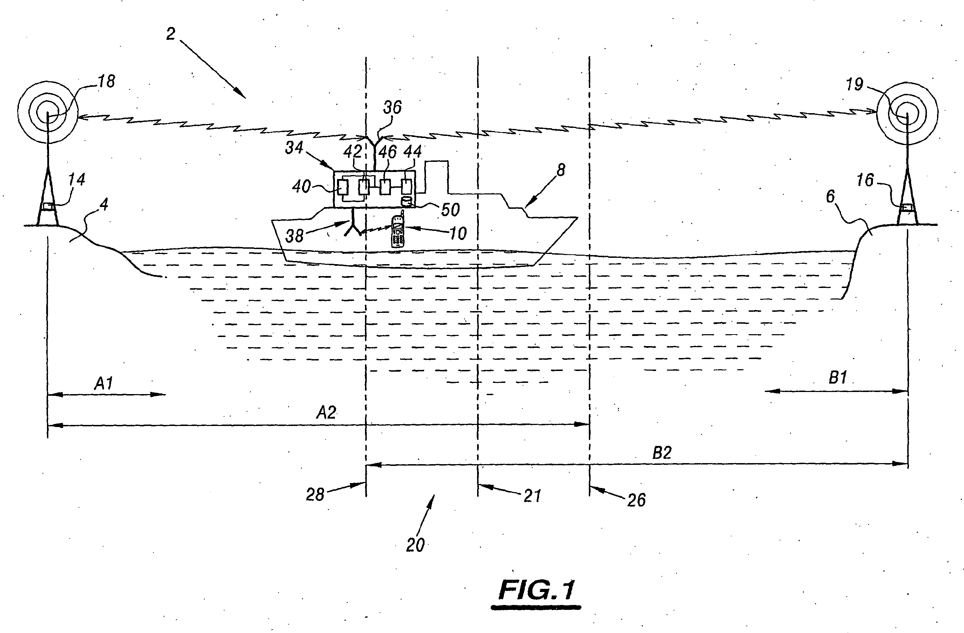

La figure 1 représente un système de télécommunication GSM (Global System for Mobile communications) désigné par la référence générale 2. Ce système 2 sera ici décrit dans le cas particulier où il est installé entre les côtes anglaises 4 et les côtes françaises 6 de manière à permettre aux passagers d'un ferry 8 de téléphoner à partir de leurs téléphones mobiles lors de la traversée de la Manche. Ici à titre d'illustration, seul un téléphone mobile 10 a été représenté.

Sur les côtes françaises et anglaises sont installées des stations d'émission/réception de base plus connues sous l'acronyme BTS (Base Transceiver Station). Ces stations 14, 16 sont formées d'émetteurs/récepteurs radio et d'au moins une antenne respectivement 18 et 19. Ces stations 14 et 16 sont aptes chacune à émettre un signal de télécommunication permettant à un téléphone mobile d'établir une liaison de télécommunication. Le signal émis par ces stations a une puissance suffisante pour permettre l'établissement et le maintien d'une liaison de télécommunication uniquement dans une zone de couverture. Ici, de manière à ce que cette zone de couverture s'étende principalement sur la Manche, les antennes 18 et 20 ont une directivité élevée en direction de la Manche.

Pour les signaux émis par les stations 14 et 16, la bande de fréquences des 1800 MGz est de préférence utilisée. Cette bande permet de limiter les brouillages et de respecter les « accords aux frontières ». Par « accords aux frontières », on désigne ici une convention passée entre des opérateurs de réseaux situés de part et d'autre d'une frontière géographique en vue de définir le fonctionnement de leurs stations émettrices respectives pour que celles-ci n'interfèrent pas entre elles.

La bande des 900 MGz peut également être utilisée pour des distances supérieures à 70 Km. Dans les deux cas les « accords aux frontières » sont respectés par la fixation d'une frontière géographique.

La France et l'Angleterre sont séparées par une frontière maritime 20 sensiblement à mi-distance entre les côtes françaises et anglaises.

Ici, cette frontière 20 n'est pas une limite parfaite mais plutôt une bande de territoire délimitée côté français par une limite 26 et côté anglais par une limite 28.

Pour permettre à un passager du ferry 8 de téléphoner à partir de son téléphone mobile pendant toute la traversée entre la France et l'Angleterre, la puissance des signaux émis par les stations 14 et 16 est réglée de manière à créer pour chaque station au moins une zone de couverture se chevauchant avec celle de l'autre station.

La station 14 crée une première et une seconde zones de couverture A1 et A2. Ces zones A1 et A2 sont représentées sur la figure 1 par des flèches. La zone A1 est une zone de couverture dans laquelle la puissance du signal émis par la station 14 est suffisante pour qu'un téléphone mobile puisse établir une liaison de télécommunication directement avec la station 14. La zone A2 est une zone de couverture dans laquelle le signal émis par la station 14 a une puissance suffisante pour être reçu et amplifié puis rediffusé par un répéteur. Plus précisément, la puissance du signal émis par la station 14 est réglée de manière à ce que la zone A2 s'étende au plus jusqu'à la limite 26 lorsque les conditions de propagation des signaux de télécommunication à la surface de la mer sont idéales et au moins jusqu'à une limite 21 située à mi-distance entre les limites 26 et 28 lorsque ces conditions de propagation sont médiocres.

Ainsi, quelles que soient les conditions météorologiques ou les mouvements de la mer, la zone A2 s'étend au moins jusqu'à la limite 21.

La zone A2 englobe la zone A1 et est plus vaste que celle-ci de sorte qu'au-delà de la zone A1 il existe une zone dans laquelle un téléphone mobile ne peut pas communiquer correctement directement avec la station 14 mais par contre un répéteur le peut.

De façon similaire, la puissance du signal émis par la station 16 est réglée de manière à créer une première et une seconde zones de couverture B1 et B2. Ces zones B1 et B2 sont représentées par des flèches sur la figure 1. La zone B1 correspond fonctionnellement à la zone A1 et ne sera donc pas décrite ici plus en détail.

La puissance du signal émis par la station 16 est réglée de manière à ce que la zone B2 s'étende au mieux jusqu'à la limite 28 lorsque les conditions de propagation du signal de télécommunication sont idéales et au pire jusqu'à la limite 21 lorsque ces conditions de propagation sont médiocres.

Ainsi, quelles que soient les conditions de propagation des signaux à la surface de la Manche, les zones A2 et B2 se chevauchent partiellement le long de la frontière 20 et plus précisément le long de la limite 21.

Le téléphone 10 est un téléphone mobile GSM conventionnel. Ici, on supposera que ce téléphone 10 appartient à un abonné d'un réseau de téléphonie mobile anglais comportant la station 14. Ce téléphone 10 est donc capable de changer de cellule au sein du réseau de téléphonie mobile anglais sans pour autant interrompre une conversation téléphonique en cours. Cette fonction est connue sous le terme de "hand-over". On rappelle que cette fonction n'est disponible pour l'abonné qu'au sein du réseau de téléphonie mobile de son opérateur, ce réseau étant alors connu sous l'acronyme HPLMN (Home Public Land Mobile Network).

Ce téléphone 10 est également capable lorsqu'il est utilisé à l'étranger, c'est-à-dire en dehors de son réseau HPLMN, de sélectionner à l'endroit où il se trouve le réseau PLMN (Public Land Mobile Network) de l'opérateur ayant le meilleur niveau de réception. Cette fonction est connue sous le terme anglais de "roaming".

Le ferry 8 est équipé d'un répéteur 34 propre à recevoir, amplifier et rediffuser à l'intérieur du ferry 8 les signaux de télécommunication émis par les stations 14 et 16. A cet effet, il comporte une antenne extérieure 36 et, par exemple, au moins une antenne intérieure par pont du ferry. Le ferry comporte également au moins une antenne pour rediffuser les signaux reçus et amplifiés sur les ponts extérieurs. Ici, pour simplifier l'illustration, seule une antenne intérieure 38 a été représentée.

L'antenne 36 est capable de capter les signaux émis par les stations 14 et 16 tant que ceux-ci ont un niveau de puissance suffisant, c'est-à-dire respectivement dans les zones A2 et B2.

L'antenne intérieure 38 est destinée à rediffuser les signaux captés par l'antenne 36 à l'intérieur du ferry 8 de manière à ce qu'un passager puisse utiliser son téléphone mobile à l'intérieur même du ferry. En effet, la structure extérieure du ferry est généralement en métal et forme donc une cage de Faraday à l'intérieur de laquelle les signaux émis par les stations 14 et 16 pénètrent difficilement.

Le répéteur 34 comporte deux amplificateurs 40 et 42 propres à amplifier respectivement, le signal émis par la station 14 et le signal émis par la station 16. Les signaux amplifiés sont alors dirigés ver l'antenne 38 pour être rediffusés à l'intérieur du ferry. Ces amplificateurs 40 et 42 sont aptes à réguler la puissance du signal rediffusé à l'intérieur du ferry 8 pour que celle-ci soit sensiblement constante quelle que soit la puissance du signal reçu. De plus, la puissance des amplificateurs 40 et 42 est réglée de manière à ce que le signal rediffusé par l'intermédiaire de l'antenne 38 forme une zone de couverture sensiblement limitée au ferry 8. Ainsi, l'utilisation de tels amplificateurs permet de s'affranchir des variations des conditions de propagation des signaux de télécommunication à la surface de la mer et permettent donc l'établissement d'une liaison de télécommunication quelles que soient les conditions météorologiques ou les mouvements de la mer.

Finalement, le répéteur 34 comporte un module 44 de surveillance du franchissement de la frontière 20 ainsi qu'un module 46 de sélection de l'amplificateur à activer.

Le module 44 est apte à mesurer la puissance des signaux reçus par l'antenne 36, à calculer à partir de la puissance mesurée, un paramètre C1A représentatif de la qualité du signal émis par la station 14 et un paramètre C1B représentatif de la qualité du signal émis par la station 16. A partir de la valeur de ces paramètres, le module 44 est capable de générer un signal indiquant que la frontière 20 a été franchie.

Le module 46 est apte à sélectionner et à activer soit seulement l'amplificateur 40, soit seulement l'amplificateur 42 en fonction du signal généré par le module 44.

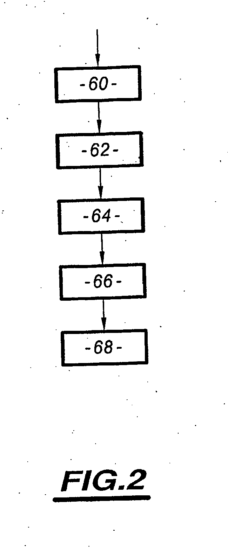

Les fonctionnalités de ces modules 44 et 46 seront décrites plus en détail en regard de la figure 2.

Le répéteur 34 est, par exemple, réalisé à partir d'un calculateur programmable conventionnel apte à exécuter des instructions enregistrées sur un support d'enregistrement d'informations. A cet effet, le répéteur 34 est équipé d'une mémoire 50 comportant des instructions pour l'exécution du procédé de la figure 2 lorsque ces instructions sont exécutées par le calculateur électronique.

Le fonctionnement du système 2 va maintenant être décrit en regard de la figure 2 dans le cas particulier où le point de départ du ferry 8 est le port de Dover en Angleterre et son point d'arrivée est le port de Calais en France.

Initialement, puisque le ferry part de Dover, seul l'amplificateur 40 est activé et seul le signal émis par la station 14 est rediffusé par le répéteur 34 à l'intérieur du ferry.

Dès la mise en marche du répéteur 34, le module 44 mesure, lors d'une opération 60 la puissance des signaux de télécommunication reçus. Dans le cas particulier décrit ici, la puissance du signal émis par la station 14 est presque nulle au-delà de la limite 26 tandis que la puissance du signal émis par la station 16 est presque nulle tant que le ferry n'a pas atteint au moins la limite 28.

Ensuite, le module 44 calcule le paramètre C1A représentatif de la qualité du signal émis par la station 14 et le paramètre C1B représentatif de la qualité du signal émis par la station 16.

Le paramètre C1A est calculé à l'aide de la relation suivante :

$$C1A = RxLev - RxLev\_access\_min - Max(MS\_txpwr\_max\_cch - Max\_tx\_MS; 0).$$

où :

- RxLev est la puissance mesurée du signal émis par la station 14,
- RxLev_access_min est une constante définissant le niveau minimum de puissance requis pour que le répéteur 34 puisse travailler avec la station 14,
- MS_txpwr_max_cch est une constante définissant la puissance maximale avec laquelle le répéteur 34 est autorisé à émettre lors d'une liaison de télécommunication avec l'une des stations 14 ou 16,
- Max_tx_ms est la puissance mesurée d'émission du répéteur 34, et
- Max (a ; b) correspond à l'opération mathématique consistant à renvoyer le plus grand des termes a, b.

Le paramètre C1B est calculé à l'aide de la même formule en mesurant la puissance du signal émis par la station 16 à la place de la puissance du signal émis par la station 14.

En permanence, le module 44 compare, lors d'une opération 62 la valeur instantanée ou la moyenne des valeurs du paramètre C1A à la valeur instantanée ou à la moyenne de la valeur du paramètre C1B.

Dans le cas du ferry 8 partant des côtes anglaises, le paramètre C1A est toujours supérieur à la valeur du paramètre C1B tant que le ferry 8 n'a pas atteint la limite 28 puisque la station 16 n'émet pas au delà de cette limite.

En fonction des conditions de propagation des signaux à la surface de la mer présente ce jour là, la valeur du paramètre C1B devient supérieure à la valeur du paramètre C1A quelque part entre les limites 26 et 28.

Dès que le module 44 détecte que la valeur du paramètre C1A est inférieure à celle du paramètre C1B, il génère, lors d'une opération 64, un signal indiquant que la frontière maritime a été franchie et le transmet au module 46.

Dès la réception de ce signal, le module 46 désactive l'amplificateur 40 et active l'amplificateur 42 lors d'une opération 66. Dès lors, le signal de télécommunication diffusé à l'intérieur du bateau par l'antenne 38 n'est plus le signal émis à partir de la station 14 mais celui émis à partir de la station 16.

Une fois le basculement d'un amplificateur vers l'autre réalisée par le module 46, celui-ci maintient, lors d'une opération 68, cette sélection quelles que soient les variations ultérieures des valeurs des paramètres C1A et C1 B de manière à diffuser un signal stable à l'intérieur du ferry 8 tant que celui-ci se trouve entre les frontières 26 et 28.

Grâce aux opérations 60 à 68, le fonctionnement du téléphone 10 lors de la traversée entre l'Angleterre et la France se déroule de la façon suivante.

Dans le port anglais et tant que le ferry est dans la zone A1, la puissance du signal émis par la station 14 est supérieure, par exemple, à celle du signal rediffusé par le répéteur 34. Dès lors, tant que le téléphone 10 se trouve dans cette zone, celui-ci communique directement avec la station 14.

Au-delà de la zone A1 et à l'intérieur de la zone A2, la puissance du signal reçu directement en provenance de la station 14 est inférieure à celle de ce même signal reçu par l'intermédiaire du répéteur 34. Dès lors, le téléphone 10 établit dans cette zone les liaisons de télécommunication par l'intermédiaire du répéteur 34.

On notera que lors du basculement de la liaison de télécommunication établie directement avec la station 14 vers une liaison de télécommunication établie par l'intermédiaire du répéteur 34 avec cette même station 14, le téléphone 10 met en oeuvre la fonctionnalité de "hand-over" de sorte qu'une conversation téléphonique établie à ce moment là n'est pas interrompue. Ce basculement s'effectue donc exactement comme si le téléphone 10 changeait de cellule à l'intérieur de son réseau HPLMN.

Ensuite, quelque part entre les limites 26 et 28, le module 46 désactive l'amplificateur 40 et active l'amplificateur 42 de sorte que le signal diffusé à l'intérieur du ferry 8 n'est plus celui émis par la station 14 mais celui émis par la station 16. Lors de ce basculement, une conversation téléphonique en cours à partir du téléphone 10 n'est pas interrompue mais sa qualité se dégrade brusquement ce qui conduit à l'interruption de la conversation téléphonique soit parce que le passager a raccroché, soit parce que le téléphone mobile a coupé la liaison.

Une fois la conversation interrompue, le passager peut rappeler immédiatement son correspondant. Lors de ce nouvel appel, le téléphone 10 met en oeuvre sa fonctionnalité de "roaming". En effet, le téléphone 10 à cet instant là, ne peut plus capter le signal de la station 14. Dès lors, il établit qu'il se trouve à l'étranger et recherche le réseau d'un autre opérateur présentant un bon niveau de réception. A bord du ferry 8, il ne pourra détecter que le signal rediffusé par le répéteur 34, c'est-à-dire celui de la station 16.

Ensuite, cette situation se maintient jusqu'à ce que le ferry 8 atteigne les côtes françaises. A proximité des côtes françaises, le téléphone 10 peut éventuellement communiquer directement avec la station 16 lorsque le ferry 8 est dans la zone B1.

Ainsi, grâce au système 2, tant que l'abonné est dans les eaux territoriales anglaises, celui-ci établit des liaisons de télécommunication par l'intermédiaire de la station 14 et son appel est facturé comme un appel national. Dès que le module 44 détecte que la frontière 20 a été franchie, toute conversation téléphonique du téléphone 10 établie par l'intermédiaire de la station 14 est interrompue et toute nouvelle conversation téléphonique ne peut être établie que par l'intermédiaire de la station 16. Dès lors, dès que le module 44 détecte le franchissement de la frontière maritime, les conversations téléphoniques du téléphone 10 sont facturées au tarif d'un appel international. Ceci est conforme aux réglementations sur la téléphonie mobile actuellement en vigueur.

Dans le système 2, la détection du franchissement de la frontière 20 est établie à partir de la qualité de réception des signaux de télécommunication de sorte qu'à l'instant où le module 46 sélectionne le nouvel amplificateur à activer, la qualité du nouveau signal à amplifier et à rediffuser est garantie. Toutefois, en variante, le module 44 peut être remplacé par un module GPS (Global Positioning System) propre à détecter le franchissement de la frontière 20. Ainsi, dans cette variante, l'imprécision sur le lieu où se produit le basculement d'un amplificateur vers l'autre est considérablement réduite. Toutefois, ceci se produit éventuellement au détriment de la qualité du signal amplifié.

Le système 2 a été décrit dans le cas particulier où les amplificateurs 40 et 42 ne sont jamais simultanément activés. En variante, le système 2 est adapté pour que les amplificateurs 40 et 42 soient simultanément activés lors du passage de la frontière 20 c'est-à-dire entre les limites 26 et 28. Par exemple, le répéteur comporte à cet effet un module GSM propre à déterminer le franchissement des limites 26 et 28, et le module de sélection est adapté pour activer, uniquement à l'intérieur des limites 26 et 28, les deux amplificateurs 40 et 42. En dehors de ces limites 26 et 28, le fonctionnement du module de sélection est identique à celui décrit en regard de la figure 1.

Dans l'exemple particulier de réalisation décrit ici, le téléphone mobile 10 est utilisé pour établir des conversations téléphoniques avec d'autres abonnés. Toutefois, en variante, celui-ci peut être utilisé et intégré dans des appareils mobiles et servir à transférer des données ou autres informations techniques recueillies par cette appareil.

### Revendications

1.    Système de télécommunication pour assurer le fonctionnement d'un téléphone mobile (10) à bord d'un véhicule (8) lors du franchissement d'une frontière géographique (20) séparant son réseau «Home Public Land Mobile Network», ci-après HPLMN, d'un réseau «Public Land Mobile Network», ci-après PLMN, étranger sélectionnable Par le téléphone mobile en mettant en oeuvre une fonctionnalité de « roaming », ce système comportant:

   - une première et une seconde stations, (14, 16), propres à émettre respectivement un premier signal et un second signal de télécommunication pour permettre l'établissement et/ou le maintien d'une liaison de télécommunication à partir du téléphone mobile, la première station appartenant au réseau HPLMN et la seconde station appartenant au réseau PLMN étranger, et
   - un répéteur (34) placé à bord du véhicule propre à amplifier et à rediffuser au moins un des signaux de télécommunication avec un niveau de puissance suffisant en permanence pour permettre au téléphone mobile (10) à bord du véhicule d'établir et/ou de maintenir une liaison de télécommunication indépendamment des variations de puissance du signal de télécommunication reçu par le répéteur,

   .**caractérisé en ce que** le répéteur (34) est équipé :

   - d'un module (44) de surveillance propre à détecter le franchissement par le véhicule de ladite frontière, et
   - d'un module (46) de sélection du signal amplifié et diffusé par le répéteur, ce module étant propre à sélectionner uniquement le premier signal de télécommunication tant que le détecteur n'a pas détecté le franchissement de la frontière, et uniquement le second signal de télécommunication lorsque le détecteur a détecté que la frontière a été franchie.

2.    Système selon la revendication 1, **caractérisé en ce que** le module de surveillance (44) est apte à détecter le franchissement de la frontière en mesurant au moins une caractéristique des premier et second signaux.

3.    Système selon la revendication 2, **caractérisé en ce que** la ou l'une des caractéristiques mesurées est la puissance des premier et second signaux.

4.    Système selon la revendication 2 ou 3, **caractérisé en ce que** les première et la deuxième stations sont placées de part et d'autre de la frontière, **en ce que** la puissance d'émission des première et seconde stations est réglée pour que leurs zones de couvertures respectives (A2, B2) se chevauchent au moins le long de ladite frontière et ceci quelles que soient les conditions de propagation des signaux de télécommunication pouvant être rencontrées, et

   - **en ce que** le module de surveillance (44) est apte à calculer pour chaque signal de télécommunication la valeur d'un paramètre fonction d'au moins une ou de chaque caractéristique mesurée pour ce signal, ce paramètre étant représentatif de la qualité de ce signal, et à détecter le franchissement de la frontière lorsque la qualité d'un des signaux de télécommunication reçus devient supérieure à l'autre.

**5.** Système selon la revendication 4, **caractérisé en ce que** le module de sélection (46) est apte à maintenir sa sélection quelles que soient les variations ultérieures des valeurs dudit paramètre.

**6.** Système selon l'une quelconque des revendications précédentes, **caractérisé en ce que** le répéteur (34) est équipé d'une première antenne (36) placée à l'extérieur du véhicule pour capter les premier et second signaux, et d'au moins une seconde antenne (38) placée à l'intérieur du véhicule pour rediffuser ces signaux à l'intérieur du véhicule.

**7.** Système selon l'une quelconque des revendications précédentes, **caractérisé en ce qu'**il comporte le véhicule et **en ce que** ce véhicule est un bateau (8).

**8.** Répéteur pour un système de télécommunication conforme à l'une quelconque des revendications précédentes, **caractérisé en ce que** ce répéteur est équipé :

- d'un module (44) de surveillance propre à détecter le franchissement par le véhicule de ladite frontière, et
- d'un module (46) de sélection du signal amplifié et diffusé par le répéteur, ce module étant propre à sélectionner uniquement le premier signal de télécommunication tant que le détecteur n'a pas détecté le franchissement de la frontière, et uniquement le second signal de télécommunication lorsque le détecteur a détecté que la frontière a été franchie.

**9.** Procédé de télécommunication pour assurer le fonctionnement d'un téléphone mobile à bord d'un véhicule lors du franchissement d'une frontière géographique séparant son réseau HPLMN d'un réseau PLMN étranger sélectionnable par le téléphone mobile en mettant en ouvre une fonctionnalité de « roaming », ce procédé comportant :

- une première étape d'émission d'un premier signal par une première station et d'un second signal de télécommunication par une seconde station pour permettre l'établissement et/ou le maintien d'une liaison de télécommunication à partir du téléphone mobile, la première station appartenant au réseau HPLMN et la seconde station appartenant au réseau PLMN étranger, et
- une étape d'amplification et de rediffusion d'un des signaux de télécommunication avec un niveau de puissance suffisant en permanence pour permettre au téléphone mobile à bord du véhicule d'établir et/ou de maintenir une liaison de télécommunication indépendamment des variations de puissance des signaux de télécommunication reçus par le répéteur,

**caractérisé en ce que** le procédé comporte en outre les étapes consistant :

- à engendrer le premier et le deuxième signal selon une zone de couverture commune délimitant une zone intermédiaire permanente au voisinage de cette frontière géographique ;
- à détecter (en 60, 62) le franchissement par le véhicule de la frontière géographique dans la zone intermédiaire ;
- à sélectionner (en 66), dans la zone intermédiaire, le signal à amplifier, de manière à discriminer uniquement le premier signal de télécommunication tant que le franchissement de la frontière géographique n'a pas été détecté respectivement le deuxième signal une fois que le franchissement de la frontière géographique a été détecté.

**10.** Procédé selon la revendication 9, **caractérisé en ce que** l'étape consistant à détecter la frontière géographique consiste en une détection de position (GPS) du véhicule.

**11.** Procédé selon la revendication 9, **caractérisé en ce que** l'étape consistant à détecter la frontière géographique consiste en une mesure relative d'une caractéristique radioélectrique des premier et deuxième signaux.

**Claims**

**1.** Telecommunication system for ensuring the operation of a mobile telephone (10) on board a vehicle (8) when crossing a geographic border (20) separating its "Home Public Land Mobile Network", hereinafter HPLMN, from a foreign "Public Land Mobile Network", hereinafter PLMN, that can be selected by the mobile telephone by implementing a "roaming" functionality, this system comprising:

- a first and a second stations (14, 16), specifically for transmitting respectively a first telecommunication signal and a second telecommunication signal to enable a telecommunication link to be set up and/or maintained from the mobile telephone, the first station belonging to the HPLMN and the second station belonging to the foreign PLMN, and

- a repeater (34) placed on board the vehicle specifically for amplifying and retransmitting at least one of the telecommunication signals with a power level that is permanently sufficient to enable the mobile telephone (10) on board the vehicle to set up and/or maintain a telecommunication link independently of the power variations of the telecommunication signal received by the repeater,

. **characterized in that** the repeater (34) is equipped:

- with a monitoring module (44) specifically for detecting the crossing of said border by the vehicle, and
- a selection module (46) for selecting the signal amplified and transmitted by the repeater, this module being specifically for selecting only the first telecommunication signal as long as the detector has not detected the crossing of the border, and only the second telecommunication signal when the detector has detected that the border has been crossed.

2. System according to claim 1, **characterized in that** the monitoring module (44) is able to detect the crossing of the border by measuring at least one characteristic of the first and second signals.

3. System according to claim 2, **characterized in that** the or one of the measured characteristics is the power of the first and second signals.

4. System according to claim 2 or 3, **characterized in that** the first and the second stations are placed either side of the border, **in that** the transmit power of the first and second stations is set so that their respective coverage areas (A2, B2) overlap at least along said border and this whatever the conditions of propagation of the telecommunication signals that can be encountered, and

   - **in that** the monitoring module (44) is able to calculate for each telecommunication signal the value of a parameter according to at least one or each characteristic measured for this signal, this parameter being representative of the quality of this signal, and to detect the crossing of the border when the quality of one of the received telecommunication signals becomes greater than the other.

5. System according to claim 4, **characterized in that** the selection module (46) is able to maintain its selection whatever the subsequent variations of the values of said parameter.

6. System according to any one of the preceding claims, **characterized in that** the repeater (34) is equipped with a first antenna (36) placed outside the vehicle to pick up the first and second signals, and at least one second antenna (38) placed inside the vehicle to retransmit these signals inside the vehicle.

7. System according to any one of the preceding claims, **characterized in that** it comprises the vehicle and **in that** this vehicle is a ship (8).

8. Repeater for a telecommunication system conforming to any one of the preceding claims, **characterized in that** this repeater is equipped:

   - with a monitoring module (44) specifically for detecting the crossing of said border by the vehicle, and
   - a selection module (46) for selecting the signal amplified and transmitted by the repeater, this module being specifically for selecting only the first telecommunication signal as long as the detector has not detected the crossing of the border, and only the second telecommunication signal when the detector has detected that the border has been crossed.

9. Telecommunication method for ensuring the operation of a mobile telephone on board a vehicle when crossing a geographic border separating its HPLMN from a foreign PLMN, that can be selected by the mobile telephone by implementing a "roaming" functionality, this method comprising:

   - a first step for transmission of a first signal by a first station and a second telecommunication signal by a second station to enable a telecommunication link to be set up and/or maintained from the mobile telephone, the first station belonging to the HPLMN and the second station belonging to the foreign PLMN, and
   - a step for amplifying and retransmitting one of the telecommunication signals with a power level that is permanently sufficient to enable the mobile telephone on board the vehicle to set up and/or maintain a telecommunication link independently of the power variations of the telecommunication signals received by the repeater,

**characterized in that** the method also comprises the steps consisting in:

- generating the first and the second signal according to a common coverage area delimiting a permanent intermediate area in the vicinity of this geographic border;
- detecting (in 60, 62) the crossing of the geographic border by the vehicle in the intermediate area;
- selecting (in 66), in the intermediate area, the signal to be amplified, so as to discriminate only the first telecommunication signal as long as the crossing of the geographic border has not been detected, respectively the second signal once the crossing of the geographic border has been detected.

10. Method according to claim 9, **characterized in that** the step consisting in detecting the geographic border consists in a detection of the position (GPS) of the vehicle.

11. Method according to claim 9, **characterized in that** the step consisting in detecting the geographic border consists in a relative measurement of a radiofrequency characteristic of the first and second signals.


**Patentansprüche**

1. Telekommunikationssystem zur Gewährleistung des Betriebs eines Mobiltelefons (10) an Bord eines Fahrzeugs (8) beim Überqueren einer geographischen Grenze (20), die sein Netz "Home Public Land Mobile Network", nachfolgend HPLMN, von einem fremden Netz "Public Land Mobile Network", nachfolgend PLMN, trennt, das vom Mobiltelefon gewählt werden kann, indem eine "Roaming"-Funktionalität angewendet wird, wobei dieses System aufweist:

- eine erste und eine zweite Station (14, 16), die in der Lage sind, ein erstes bzw. ein zweites Telekommunikationssignal zu senden, um den Aufbau und/oder die Aufrechterhaltung einer Telekommunikationsverbindung ausgehend vom Mobiltelefon zu erlauben, wobei die erste Station zum Netz HPLMN und die zweite Station zum fremden Netz PLMN gehört, und
- einen Verstärker (34), der an Bord des Fahrzeugs angeordnet und in der Lage ist, mindestens eines der Telekommunikationssignale mit einem permanent ausreichenden Leistungspegel zu verstärken und wieder auszusenden, um es dem Mobiltelefon (10) an Bord des Fahrzeugs zu erlauben, eine Telekommunikationsverbindung unabhängig von den Leistungsveränderungen des vom Verstärker empfangenen Telekommunikationssignals aufzubauen und/oder aufrechtzuerhalten,

**dadurch gekennzeichnet, dass** der Verstärker (34) ausgestattet ist mit:

- einem Überwachungsmodul (44), das in der Lage ist, das Überschreiten der Grenze durch das Fahrzeug zu erfassen, und
- einem Auswahlmodul (46) des vom Verstärker verstärkten und ausgesendeten Signals, wobei dieses Modul in der Lage ist, nur das erste Telekommunikationssignal zu wählen, so lange der Detektor die Überschreitung der Grenze nicht erfasst hat; und nur das zweite Telekommunikationssignal zu wählen, wenn der Detektor erfasst hat, dass die Grenze überschritten wurde.

2. System nach Anspruch 1, **dadurch gekennzeichnet, dass** das Überwachungsmodul (44) in der Lage ist, das Überschreiten der Grenze zu erfassen, indem es mindestens eine Charakteristik des ersten und des zweiten Signals misst.

3. System nach Anspruch 2, **dadurch gekennzeichnet, dass** die gemessene oder eine der gemessenen Charakteristik(en) die Leistung des ersten und des zweiten Signals ist.

4. System nach Anspruch 2 oder 3, **dadurch gekennzeichnet, dass** die erste und die zweite Station zu beiden Seiten der Grenze angeordnet sind, dass die Sendeleistung der ersten und der zweiten Station so geregelt ist, dass ihre jeweiligen Abdeckungszonen (A2, B2) sich mindestens entlang der Grenze überlappen, und dies unabhängig von den Ausbreitungsbedingungen der Telekommunikationssignale, die angetroffen werden können, und

- dass das Überwachungsmodul (44) in der Lage ist, für jedes Telekommunikationssignal den Wert eines Parameters in Abhängigkeit von mindestens einer oder jeder für dieses Signal gemessenen Charakteristik zu berechnen, wobei dieser Parameter für die Qualität dieses Signals repräsentativ ist, und die Überschreitung der Grenze zu erfassen, wenn die Qualität eines dieser Signale größer wird als die andere.

5. System nach Anspruch 4, **dadurch gekennzeichnet, dass** das Auswahlmodul (46) in der Lage ist, seine Auswahl aufrechtzuerhalten, unabhängig von den späteren Veränderungen der Werte des Parameters.

6. System nach einem der vorhergehenden Ansprüche, **dadurch gekennzeichnet, dass** der Verstärker (34) mit einer ersten Antenne (36), die außerhalb des Fahrzeugs angeordnet ist, um das erste und das zweite Signal aufzufangen, und mit mindestens einer zweiten Antenne (38) versehen ist, die im Inneren des Fahrzeugs angeordnet ist, um diese Signale im Inneren des Fahrzeugs wieder auszusenden.

7. System nach einem der vorhergehenden Ansprüche, **dadurch gekennzeichnet, dass** es das Fahrzeug umfasst, und dass dieses Fahrzeug ein Schiff (8) ist.

8. Verstärker für ein Telekommunikationssystem nach einem der vorhergehenden Ansprüche, **dadurch gekennzeichnet, dass** dieser Verstärker ausgestattet ist mit:

- einem Überwachungsmodul (44), das in der Lage ist, die Überschreitung der Grenze durch das Fahrzeug zu erfassen, und
- einem Auswahlmodul (46) des vom Verstärker verstärkten und ausgesendeten Signals, wobei dieses Modul in der Lage ist, nur das erste Telekommunikationssignal auszuwählen, so lange der Detektor das Überschreiten der Grenze nicht erfasst hat, und nur das zweite Telekommunikationssignal auszuwählen, wenn der Detektor erfasst hat, dass die Grenze überschritten wurde.

9. Telekommunikationsverfahren zur Gewährleistung des Betriebs eines Mobiltelefons an Bord eines Fahrzeugs beim Überqueren einer geographischen Grenze, die sein Netz HPLMN von einem fremden Netz PLMN trennt, das vom Mobiltelefon gewählt werden kann, indem eine "Roaming"-Funktionalität angewendet wird, wobei dieses Verfahren aufweist:

- einen ersten Schritt des Sendens eines ersten Signals durch eine erste Station und eines zweiten Telekommunikationssignals durch eine zweite Station, um den Aufbau und/oder die Aufrechterhaltung einer Telekommunikationsverbindung ausgehend vom Mobiltelefon zu erlauben, wobei die erste Station zum Netz HPLMN und die zweite Station zum fremden Netz PLMN gehört, und
- einen Schritt der Verstärkung und der Wiederaussendung eines der Telekommunikationssignale mit einem permanent ausreichenden Leistungspegel, um es dem Mobiltelefon an Bord des Fahrzeugs zu erlauben, eine Telekommunikationsverbindung unabhängig von den Leistungsveränderungen der vom Verstärker empfangenen Telekommunikationssignale aufzubauen und/oder aufrechtzuerhalten,

**dadurch gekennzeichnet, dass** das Verfahren außerdem die Schritte aufweist, die darin bestehen:

- das erste und das zweite Signal gemäß einer gemeinsamen Abdeckungszone zu erzeugen, die eine permanente Zwischenzone in der Nähe dieser geographischen Grenze bildet;
- das Überschreiten der geographischen Grenze durch das Fahrzeug in der Zwischenzone zu erfassen (in 60, 62);
- in der Zwischenzone das zu verstärkende Signal auszuwählen (in 66), um nur das erste Telekommunikationssignal zu unterscheiden, so lange das Überschreiten der geographischen Grenze nicht erfasst wurde, bzw. das zweite Signal zu unterscheiden, wenn das Überschreiten der geographischen Grenze erfasst wurde.

10. Verfahren nach Anspruch 9, **dadurch gekennzeichnet, dass** der Schritt, der darin besteht, die geographische Grenze zu erfassen, aus einer Positionserfassung (GPS) des Fahrzeugs besteht.

11. Verfahren nach Anspruch 9, **dadurch gekennzeichnet, dass** der Schritt, der darin besteht, die geographische Grenze zu erfassen, aus einer relativen Messung einer funkelektrischen Charakteristik des ersten und des zweiten Signals besteht.

**FIG.1**

EP 1 530 390 B1

**FIG.2**

**EP 1 530 390 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1282327 A